# EUROPÄISCHE PATENTANMELDUNG

(11) **EP 0 665 340 A1**
(43) Veröffentlichungstag der Anmeldung: **02.08.1995**
(21) Anmeldenummer: 94120363.0
(22) Anmeldetag: 22.12.1994
(51) Int. Cl.: E03F 5/14, B01D 29/03, B01D 29/82, B01D 29/90, B01D 29/94

(54) **Vorrichtung zur Reinigung von in Abwassern enthaltenen Feststoffen**

(30) Priorität: 13.01.1994 DE 4401182
(71) Anmelder: Noggerath Holding GmbH & Co. KG, D-31708 Ahnsen (DE)
(72) Erfinder: Beissner, Walter, D-31737 Rinteln (DE)
(74) Vertreter: Gleiss & Grosse

(57) **Zusammenfassung**

Die Erfindung betrifft eine Vorrichtung zur Reinigung von Stoffen, insbesondere von in Abwassern enthaltenden Feststoffen, mit einer Verwirbelungseinrichtung zur Verwirbelung des Abwassers und einer Austragseinrichtung, insbesondere einer Austragsschnecke für die gereinigten Feststoffe.

Es ist vorgesehen, daß die Verwirbelungseinrichtung von wenigstens einer Wasserstrahldüse (42) gebildet wird, die eine Wasserwalze erzeugt, deren Strömungsverhältnise derart ausgebildet sind, daß ein Eintrag der Feststoffe in die Austragseinrichtung (18) erfolgt.

## Beschreibung

Die Erfindung betrifft eine Vorrichtung zur Reinigung von Stoffen, insbesondere von in Abwassern enthaltenen Feststoffen, mit einer Verwirbelungseinrichtung zur Verwirbelung des Abwassers und einer Austragseinrichtung, insbesondere einer Austragsschnecke für die gereinigten Feststoffe.

Es ist bekannt, in Abwasseranlagen, beispielsweise Abwasserkanälen oder Abwassergerinnen, Rechenanlagen zu installieren, um in dem Abwasser angesammelte Feststoffe jeglicher Art abzuscheiden. Diese Rechenanlagen lassen im wesentlichen den flüssigen Bestandteil des Abwassers durch und stauen die festen Bestandteile im Abwasser, beispielsweise Sand, Müll, langfaserige Güter und ähnliches an. Es ist bekannt, diese Rechenanlagen als Grobrechen, Feinrechen und/oder Feinsieb auszubilden, damit Feststoffe unterschiedlichster Art abgeschieden werden können. Damit Verstopfungen der Rechenanlage vermieden werden, müssen diese im regelmäßigem Abstand von den angestauten Feststoffen befreit werden. Da die Feststoffe in mehr oder weniger großem Umfang organische Anhaftungen aufweisen, ist deren Weiterverarbeitung, beispielsweise zu Brennstoffen oder Deponierung, nur unter Einhaltung erhöhter Sicherheitsvorkehrungen möglich, da die anhaftenen organischen Abfälle ein erhöhtes Umweltrisiko darstellen.

Es ist bekannt, an Stelle der Rechenanlagen direkt in die Abwasserkanäle oder Abwassergerinne eine Vorrichtung zur Reinigung des Rechenguts, einen sogenannten Rechengutwäscher einzubringen. Der Rechengutwäscher weist eine Austragsschnecke auf, die unmittelbar in dem Wirkbereich eines Wirbelmixers angeordnet ist. Der Wirbelmixer wird in einer Vertiefung des Abwasserkanales oder des Abwassergerinnes eingesetzt und führt zu einer Verwirbelung der mit dem Abwasser herangetragenen Feststoffe. Hierbei ist jedoch nachteilig, daß zusätzliche bautechnische Vorkehrungen in den Abwasserkanälen oder Abwassergerinnen zu schaffen sind, damit eine versenkte Aufnahme des Wirbelmixers möglich ist. Hierdurch ist die Mobilität eines derartigen Rechengutwäschers stark eingeschränkt, da dieser an das Vorhandensein einer entsprechenden Vertiefung gebunden ist. Darüber hinaus führt die Verwirbelung mit einem Wirbelrad, das nach dem Prinzip einer Wellrad-Waschmaschine arbeitet, oft zu großen verzopften Rechengutballen, die sich um das Wirbelrad winden und dieses damit blockieren. Dies führt zu einem Funktionsausfall der Vorrichtung, der sich nur durch eine Räumung des Wirbelmixers von Hand beheben läßt. Da diese Bildung der Rechengutballen nicht regelmäßig überwacht werden kann, kommt es in der Folge häufig zu Ausfällen der Rechengutwäscher durch Verstopfungen und/oder Zerstörungen der Transportspirale und des Antriebsaggregates des Wirbelmixers durch dessen Festlaufen.

Der Erfindung liegt daher die Aufgabe zu Grunde, eine Vorrichtung der gattungsgemäßen Art zu schaffen, die einfach aufgebaut ist und mit der ein kontinuierlicher Betrieb mit einer verbesserten Durchsatzleistung möglich ist.

Erfindungsgemäß wird diese Aufgabe dadurch gelöst, daß die Verwirbelungseinrichtung von wenigstens einer Wasserstrahldüse gebildet wird, die eine Wasserwalze erzeugt, deren Strömungsverhältnisse derart ausgebildet sind, daß ein Eintrag der Feststoffe in die Austragseinrichtung erfolgt. Durch die Ausbildung einer derartigen wasserwalze wird es vorteilhaft möglich, daß die über den Abwasserkanal oder das Abwassergerinne herangeführten, mit organischen Stoffen verunreinigten Feststoffe optimal gewaschen werden können und nach der Wäsche sofort über die Austragseinrichtung aus dem Abwasser entfernt werden können. Die Austragseinrichtung übernimmt dabei vorteilhafterweise gleichzeitig die Funktion eines Abwassersiebes, so daß die in dem Abwasser enthaltenen Feststoffe aufgehalten werden und diese dann gleichzeitig durch die Wasserwalze verwirbelt und damit gewaschen werden. Durch diese Verwirbelung können die an den Oberflächen der Feststoffe anhaftenden organischen Bestandteile abgelöst und die gereinigten Feststoffe direkt und kontinuierlich der Austragseinrichtung zugeführt werden. Durch das kontinuierliche Verwirbeln des Wassers und damit der dort enthaltenen Feststoffe wird ein zusätzliches Zusammenballen und Verzopfen der Feststoffe vermieden. Selbst faserige Feststoffe, die sehr leicht zu Verzopfungen neigen, können problemlos gewaschen und ausgetragen werden.

Nach einer Weiterbildung der Erfindung ist vorgesehen, daß die Austragseinrichtung eine Verlängerung aufweist, die einen Reaktionsraum ausbildet, in den die Wasserstrahldüse mündet. Durch die Ausbildung dieses Reaktionsraumes unmittelbar an der Austragseinrichtung, wird die Mobilität der gesamten Vorrichtung wesentlich erhöht, da diese nunmehr an jeder beliebigen Stelle eines Abwasserkanales bzw. Abwassergerinnes eingesetzt werden kann. Weiterhin wird durch diese Anordnung vorteilhaft möglich, die Ausbildung der Wasserwalze im wesentlichen auf den Reaktionsraum zu beschränken, so daß eine intensive Wäsche der Feststoffe erfolgen kann. Gleichzeitig können die Strömungsverhältnisse in der Wasserwalze so eingestellt werden, daß neben der Wäsche ein Einspülen der gereinigten Feststoffe in die Austragseinrichtung erfolgen kann, so daß ein kontinuierlicher Betrieb der gesamten Vorrichtung möglich ist. Die mit dem Abwasser herantransportierten Feststoffe gelangen durch die Strömungsrichtung des Abwassers in den Reaktionsraum und werden dort durch die Wasserwalze einer Zwangswäsche unterzogen, so daß sichergestellt ist, daß über die Austragseinrichtung in jedem Fall von organischen Anhaftungen befreite Feststoffe ausgetragen werden.

Nach einer weiteren vorteilhaften Ausgestaltung der Erfindung ist vorgesehen, daß die Düsenaustrittsöffnung der Wasserstrahldüse in einem Winkel zu einer Längsachse der Vorrichtung und/oder in einem Winkel zu einem Boden der Verlängerung angeordnet ist. Hierdurch wird es vorteilhaft möglich, durch die Wahl des Anstellungswinkels der Wasserstrahldüse auf die Ausbildung der Wasserwalze derart Einfluß zu nehmen, daß sich eine Vertikalwalze bildet, die die gewaschenen Feststoffe in einen Aufnahmebereich der Austragseinrichtung einspült. Insbesondere kann hierdurch eine gezielte Strömung in der Vertikalwalze erzeugt werden, die gegebenenfalls in einem Winkel zu der Grundströmung des Abwassers verläuft, so daß eine intensive Verwirbelung und damit intensive und gründliche Wäsche der Feststoffe möglich ist.

Nach einer weiteren bevorzugten Ausgestaltung der Erfindung ist vorgesehen, daß die Wasserstrahldüse mit einer Tauchpumpe versehen ist, die in Strömungsrichtung der Verlängerung der Austragseinrichtung angeordnet ist. Hiermit wird es möglich, das bereits von den Feststoffen befreite Abwasser gleichzeitig als Waschwasser für die Feststoffe zu nutzen. Somit ist kein zusätzliches Heranführen von Waschwasser nötig, da dieses durch das Absieben der Feststoffe durch die Vorrichtung, insbesondere durch den Siebbereich der Austragseinrichtung selbst zur Verfügung gestellt wird.

Insgesamt kann so mit wenigen, einfach aufgebauten Teilen eine transportable Vorrichtung zur Reinigung von Stoffen, insbesondere von in Abwassern enthaltenen Feststoffen geschaffen werden, die an jeder beliebigen Stelle eines Abwasserkanales oder eines Abwassergerinnes eingebracht werden kann.

Weitere vorteilhafte Ausgestaltungen der Erfindung ergeben sich aus den übrigen in den Unteransprüchen genannten Merkmalen.

Die Erfindung wird nachfolgend in einem Ausführungsbeispiel anhand der zugehörigen Zeichnungen naher erläutert. Es zeigen:
- Figur 1: einen Längsschnitt durch eine Vorrichtung zur Reinigung von in Abwassern enthaltenen Feststoffen;
- Figur 2: eine Draufsicht auf einen Reaktionsraum der in Figur 1 gezeigten Vorrichtung und
- Figur 3: einen aufgeschnittenen Längsschnitt durch einen Reaktionsraum in vergrößerter Darstellung.

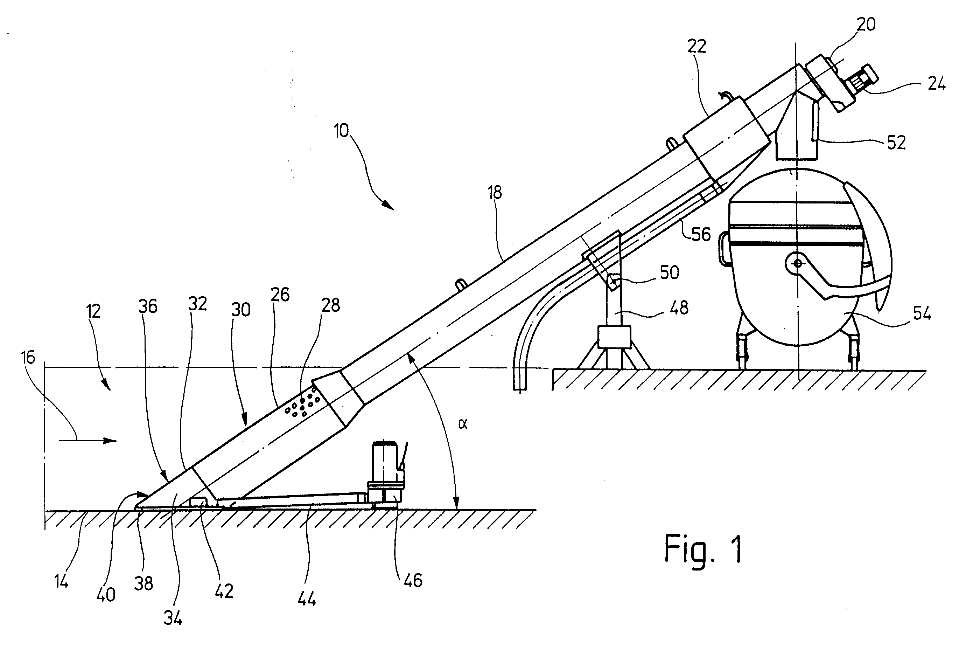

Figur 1 zeigt eine allgemein mit 10 bezeichnete Vorrichtung zur Reinigung von in Abwassern enthaltenen Feststoffen. Die Vorrichtung 10 ist an einem Abwassergerinne 12 angeordnet. Das Abwassergerinne 12 ist hier lediglich schematisch angedeutet und besteht aus einem im wesentlichen sich längs erstreckenden kanalförmigen Abschnitt. Das Abwassergerinne 12 weist eine Gerinnesohle 14 auf und kann an seiner Oberseite offen oder auch geschlossen sein. In dem Abwassergerinne 12 herrscht eine hier mit einem Pfeil 16 angedeutete Abwasserströmung, innerhalb der mit dem Abwasser Feststoffe jeglicher Art, die gegebenenfalls mit organischen Anhaftungen versehen sind, transportiert werden.

Die Vorrichtung 10 weist eine Austragseinrichtung 18 auf, innerhalb der eine hier nicht dargestellte Transportspirale, die auf einer Antriebswelle 20 gelagert ist, angeordnet ist. Die Antriebswelle 20 durchgreift eine Pressvorrichtung 22 und ist durch einen Getriebemotor 24 antreibbar. Die Austragseinrichtung 18 greift in das Abwassergerinne 12 ein und weist dort einen Siebkorb 26 auf, der eine hier angedeutete Lochung 28 besitzt. Die Transportspirale durchgreift ebenfalls den Siebkorb 26 und wird von diesem umschlossen. Der Siebkorb 26 ist derart ausgebildet, daß er die Transportspirale nur zu ca. 70% umschließt und in dem oberen Mantelbereich offen ist. Die von dem Siebkorb 26 gebildete Öffnung 30 ist dabei gegen die Abwasserströmung 16 geöffnet. Der Siebkorb 26 wird durch eine seitliche Abdichtung, beispielsweise mittels Gummileisten, gegen die Wandung des Abwassergerinnes 12 abgedichtet. Hierdurch wird verhindert, daß das Abwasser und die in dem Abwasser enthaltenen Feststoffe den Siebkorb 26 seitlich passieren können. Die Transportspirale ist an ihrem äußeren Umfang mit Bürsten versehen, die bei einer Drehbewegung der Transportspirale an dem Siebkorb 26 entlang schleifen.

Der Siebkorb 26 besitzt eine axiale Verlängerung 32, die einen geschlossenen Mantel 34 aufweist, der ebenfalls in Richtung der Abwasserströmung 16 eine Öffnung 36 aufweist. Der Mantel besitzt eine Bodenplatte 38, die auf der Gerinnesohle 14 des Abwassergerinnes 12 aufliegt. Die Verlängerung 32 bildet somit einen Reaktionsraum 40, der einerseits durch die Öffnung 36 zugänglich ist und andererseits in dem Siebkorb 26 mündet. Nach einem nicht dargestellten Ausführungsbeispiel kann der Mantel 34 an seiner der Gerinnesohle 14 zugewandten Kante Dichtlippen aufweisen, so daß auf die Anordnung einer Bodenplatte 38 verzichtet werden kann. An dem Mantel 34 ist eine Wasserstrahldüse 42 angeordnet, die mit ihrer Öffnung in dem Reaktionsraum 40 mündet. Die Wasserstrahldüse 42 ist über eine Leitung, beispielsweise einen Schlauch 44 mit einer Pumpe, beispielsweise einer Tauchpumpe 46 verbunden.

Die Austragseinrichtung 18 stützt sich auf einer Traverse 48 ab, die über ein Scharnier 50 angelenkt ist und höhenverstellbar ausgebildet sein kann. Über die Traverse 48 ist ein Winkel α einstellbar, mit dem die Austragseinrichtung 18 zu der Gerinnesohle 14 des Abwassergerinnes 12 geneigt ist. Die Austragseinrichtung 18 mündet über die Pressvorrichtung 22 in einer Auswurföffnung 52. Die Auswurföffnung 52 kann dabei beispielsweise wie in Figur 1 dargestellt, über einen Container 54 angeordnet sein. Die Pressvorrichtung 22 ist mit einem Ablaufschlauch 56 verbunden, der in das Abwassergerinne 12 mündet.

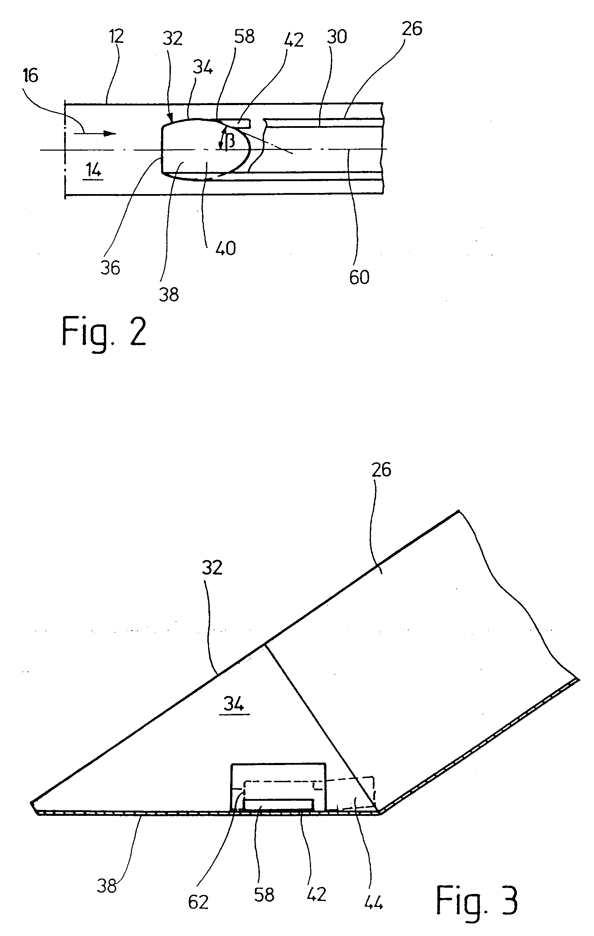

Figur 2 zeigt in einer schematischen Draufsicht den in Figur 1 gezeigten Bereich des Reaktionsraums 40. Gleiche Teile wie in Figur 1 sind mit gleichen Bezugszeichen versehen und hier nicht nochmals erläutert. In der Draufsicht ist der Siebkorb 26 dargestellt, der die nach oben bzw. in Richtung der Abwasserströmung 16 gerichtete Öffnung 30 aufweist.

Der Siebkorb 26 ist hier im oberen Bereich weggeschnitten, so daß die Draufsicht auf den Reaktionsraum 40 deutlich wird. Die Bodenplatte 38 des Reaktionsraumes 40 weist einen ovalen Querschnitt auf, der durch den Mantel 34, der gleichzeitig die Verlängerung 32 des Siebkorbes 26 bildet, umschlossen wird. An dem Mantel ist die Wasserstrahldüse 42 angeordnet, die mit ihrer Düsenaustrittsöffnung 58 in den Reaktionsraum 40 mündet. Auf die Darstellung des Schlauches 44 wurde in der Draufsicht verzichtet. Es wird weiterhin deutlich, daß das Spiralsieb 26 eine geringere Breite aufweist als das Abwassergerinne 12. Zwischen dem Siebkorb 26 und der Seitenwandung des Abwassergerinnes 12 sind hier nicht dargestellte Abdichtungen angeordnet, die ein seitliches Vorbeifließen des Abwassers an dem Siebkorb 26 verhindern. Die Düsenaustrittsöffnung 58 ist in einem Winkel β zu einer durch den Siebkorb 26 bzw. die Verlängerung 32 verlaufenden Axialen 60 angeordnet. Die Anordnung der in Figur 2 gezeigten Wasserstrahldüse 42 ist hier lediglich beispielhaft und kann an jeder beliebigen Stelle des Mantels 34 erfolgen. Nach einem nicht gezeigten Ausführungsbeispiel können an dem Mantel 34 auch mehrere, beispielsweise zwei sich gegenüber liegende Wasserstrahldüsen 42 vorgesehen sein.

In der Figur 3, in der wiederum gleiche Teile wie in den Figuren 1 und 2 mit gleichen Bezugszeichen versehen sind, ist der Bereich des Reaktionsraumes 40 in einer vergrößerten aufgeschnittenen Seitenansicht dargestellt. Es wird deutlich, daß die Wasserstrahldüse 42 mit ihrer Düsenaustrittsöffnung 58 in dem Mantel 34 der Verlängerung 32 mündet. Über der Düsenaustrittsöffnung 58 ist hier angedeutet eine flexible Abdeckung 62 angeordnet, die die Düsenaustrittsöffnung 58 im Ruhezustand verschließt und ein Klappenventil bildet. Nach einem weiteren Ausführungsbeispiel ist es möglich, die Düsenaustrittsöffnung 58 mit einem Siebblech zu versehen. Dieses Siebblech verhindert, ohne einen Wasseraustritt aus der Wasserstrahldüse 42 zu behindern, daß grobe Verunreinigungen in die Wasserstrahldüse 42 beziehungsweise den Schlauch 44 gelangen. Zusätzlich, aber auch separat kann der Einbau einer Rückschlagarmatur in die Verbindung zwischen der Wasserstrahldüse 42 und der Pumpe 46 vorgesehen sein. Diese verhindert nach Abschalten der Pumpe 46 eine Rückströmen des Waschwassers und damit den Eintritt von Verunreinigungen in die Wasserstrahldüse 42.

Die Düsenaustrittsöffnung 58 verläuft mit ihrer Längserstreckung in etwa parallel zu der Bodenplatte 38. Nach weiteren nicht dargestellten Ausführungsbeispielen kann die Düsenaustrittsöffnung 58 mit ihrer Längserstreckung auch in einem Winkel zu der Bodenplatte 38 verlaufen. Weiterhin kann die Düsenaustrittsöffnung 58 einen Anstellwinkel aufweisen, so daß diese mit Ihrer Austrittsfläche gegen die Bodenplatte 38 gerichtet ist. Die Wasserstrahldüse 42 kann weiterhin mehrere voneinander getrennte Düsenarme aufweisen, die jeweils für sich eine Düsenaustrittsöffnung 58 bilden, die gleiche oder verschiedene Winkel zu der Bodenplatte 38 und/oder der in Figur 2 gezeigten Axialen 60 aufweisen können.

Die in den Figuren 1 bis 3 gezeigte Vorrichtung 10 übt folgende Funktion aus:
Während des Betriebes werden mit der Abwasserströmung 16 in dem Abwassergerinne 12 Feststoffe jeglicher Art, die gegebenenfalls organische Anhaftungen aufweisen, mitgeführt. Die Abwasserströmung ist gegen den Siebkorb 26 gerichtet, so daß dieser hier als Rechen wirkt, in dem die Feststoffe durch den Siebkorb 26 zurückgehalten werden, während die flüssigen Bestandteile des Abwassers durch die Lochung 28 hindurchtreten und in dem Abwassergerinne 12, beispielsweise zu einer Kläranlage weiterfließen können. Das Abwasser und die darin enthaltenen Feststoffe treten hierbei durch die Öffnungen 30 des Siebkorbes 26 bzw. 36 der Verlängerung 32 ein. Hat sich in dem Siebkorb 28 eine solche Menge an Feststoffen angesammelt, daß die Lochung 28 in ihrer freien Durchtrittsfläche verkleinert wird, staut sich das Abwasser vor dem Siebkorb 26 an. Über eine dort angeordnete Wasserstandsmessung wird der Getriebemotor 24 derart eingeschaltet, daß die in der Austragseinrichtung 18 und dem Siebkorb 26 angeordnete Transportspirale entgegengesetzt ihrer eigentlichen Förderrichtung gedreht wird, so daß das in dem Siebkorb 26 abgelagerte Festgut in Richtung des Reaktionsraumes 40 befördert wird. Gleichzeitig beginnt die Tauchpumpe 46 Waschwasser zu fördern, das durch den Schlauch 44 und die Düse 42 in den Reaktionsraum 40 gepumpt wird. Als Waschwasser wird hierbei ein Teilstrom des zuvor durch den Siebkorb 26 hindurch getretene Abwasser verwendet, das von den darin enthaltenen Feststoffen durch den Siebkorb 26 bereits befreit ist. Entsprechend der Anordnung der Düsenaustrittsöffnung 58 wird in dem Reaktionsraum 40 eine Strömung erzeugt, die in einem bestimmten Winkel zu der Abwasserströmung 16 verläuft. Der aus der Wasserstrahldüse 42 austretende Wasserstrahl ist dabei gegen die der Wasserstrahldüse 42 gegenüberliegende Wandung der Verlängerung 32 gerichtet und wird dort umgelenkt. Hierdurch wird innerhalb des Reaktionsraumes 40 eine Wasserwalze mit einer überwiegend vertikal verlaufenden Strömung (Vertikalwalze) erzeugt. Durch diese Vertikalwalze werden die in den Reaktionsraum 40 geförderten Feststoffe verwirbelt und einer intensiven Wäsche unterzogen. Innerhalb der ausgebildeten Vertikalwalze werden die Feststoffe mitgeführt, wobei diese auf Grund der sich kreuzenden Abwasserströmung 16 mit der von der Wasserstrahldüse 42 ausgehenden Strömung mehrmals verwirbelt werden, so daß sich ein optimaler Abwaschungseffekt der anhaftenden organischen Stoffe ergibt. Durch die Vertikalwalze werden die gereinigten Feststoffe in den Siebkorb 26 zurückgespült und dort von der mittlerweile in Austragsrichtung umgeschaltenen Transportspirale erfaßt und aus dem Abwassergerinne 12 ausgetragen. Die gereinigten Feststoffe werden durch die Transportspirale der Preßvorrichtung 22 zugeführt, wo restlich anhaftendes Wasser abgepreßt wird. Das hier ausgepreßte Wasser gelangt über den Ablaufschlauch 56 zurück in das Abwassergerinne 12. Die gereinigten und ausgepreßten Feststoffe werden durch die sich weiterdrehende Transportspirale durch die Preßvorrichtung 22 in Richtung der Auswurföffnung 52 bewegt, durch die diese dann in den bereitgestellten Container 54 fallen können.

Die vor der Düsenaustrittsöffnung 58 angeordnete Abdeckung 62 dient dazu, daß während des Stillstands der Tauchpumpe 46 keine Feststoffe in die Wasserstrahldüse 42 bzw. den Schlauch 44 gelangen können. Geht die Tauchpumpe 46 in Betrieb, wird auf Grund des aufgebauten Wasserdrucks die Abdeckung 62 in Richtung des Reaktionsraumes 40 gedrückt, so daß der Wasserstrahl ungehindert austreten kann.

Der zuvor beschriebene Waschvorgang kann gegebenenfalls mehrfach wiederholt werden. Hierzu werden die gewaschenen Feststoffe durch die Transportspirale nur soweit aus dem Reaktionsraum 40 bzw. dem Siebkorb 26 herausgefördert, daß diese noch nicht die Preßvorrichtung 22 erreichen. Nun mehr wird die Transportspirale in ihrer Transportrichtung umgeschaltet, so daß die angesammelten Feststoffe wiederum zurück in den Reaktionsraum 40 befördert werden und dort einer erneuten Wäsche mittels der aufgebauten Vertikalwalze unterzogen werden können.

Um den Waschvorgang zu intensivieren, können nach einem weiteren nicht dargestellten Ausführungsbeispiel innerhalb des Reaktionsraumes 40 an dessen Mantel 34 Schikanen angeordnet sein, die Prallflächen aufweisen. Gegen diese Prallflächen werden die in dem Abwasser enthaltenen Feststoffe durch die von der Wasserstrahldüse 42 ausgehende Vertikalwalze geschleudert, so daß feste Anhaftungen von organischen Stoffen gelöst werden können. Durch den sich ständig wiederholenden Waschvorgang werden die organischen Stoffe in dem Abwasser bzw. dem zugeführten Waschwasser so gelöst, daß diese durch die Lochung 28 des Siebkorbes 26 hindurch treten können. Die gelösten organischen Stoffe werden dann mit dem von dem Festkörpern gereinigten Abwassern beispielsweise einer Kläranlage zugeführt und dort bestimmungsgemäß abgebaut. Insgesamt läßt sich somit eine erhebliche Gewichts- und Volumenreduzierung der ausgetragenen Feststoffe erreichen, so daß einerseits ein geringerer Lagerbedarf entsteht und die von den organischen Anhaftungen befreiten Feststoffe einer ökologischeren Verbrennung zugeführt werden können.

Der Einsatz der erfindungsgemäßen Vorrichtung beschränkt sich nicht auf Abwassergerinne. Die Vorrichtung 10 kann beispielsweise auch in geschlossenen Behältern eingesetzt werden, denen das mit Feststoffen belastete Abwasser auf geeignete Weise, beispielsweise über Staustufen, Fördereinrichtungen, Freigefälleleitungen, oder ähnlichem zugeführt wird. In dem Behälter wird der Siebkorb 26 zur Abscheidung der Feststoffe aus dem Abwasser eingebaut, während das Waschwasser hinter dem Siebkorb 26 aus dem Behälter entnommen und mittels einer Pumpe in die Wasserstrahldüse 42 gedrückt wird. Die Pumpe kann sowohl innerhalb des Behälters als auch außen am Behälter installiert sein.

Die Erfindung beschränkt sich nicht auf das in den Figuren 1 und 2 gezeigte Ausgeführungsbeispiel, sondern ist selbstverständlich zur Reinigung jeglichen Gutes einsetzbar. Beispielsweise kann durch das hier praktizierte Niederdruck-Intensivwaschen mittels des eingestrahlten Wassers in einem Gerinne geförderter Sand, Kies oder Ähnliches von Oberflächen-Verunreinigungen befreit werden. Entscheidend wäre lediglich eine Anpassung der Lochung 28 des Siebkorbes 26 an das zu reinigende Gut.

## Patentansprüche

1. Vorrichtung zur Reinigung von Stoffen, inbesondere von in Abwassern enthaltenen Feststoffen, mit einer Verwirbelungseinrichtung zur Verwirbelung des Abwassers und einer Austragseinrichtung, insbesondere einer Austragsschnecke für die gereinigten Feststoffe, **dadurch gekennzeichnet**, daß die Verwirbelungseinrichtung von wenigstens einer Wasserstrahldüse (42) gebildet wird, die eine Wasserwalze erzeugt, deren Strömungsverhältnisse derart ausgebildet sind, daß ein Eintrag der Feststoffe in die Austragseinrichtung (18) erfolgt.

2. Vorrichtung nach Anspruch 1, **dadurch gekennzeichnet**, daß die Austragseinrichtung (18) eine Verlängerung (32) aufweist, die einen Reaktionsraum (40) ausbildet, in den die Wasserstrahldüse (42) mündet.

3. Vorrichtung nach einem vorhergehenden Ansprüche, **dadurch gekennzeichnet**, daß die Verlängerung (42) entgegen einer Abwasserströmung (16) offen ist.

4. Vorrichtung nach Anspruch 3, **dadurch gekennzeichnet**, daß die Öffnung (36) ca. 30 % eines Mantels (34) der Verlängerung (32) beträgt.

5. Vorrichtung nach einem der vorhergehenden Ansprüche, **dadurch gekennzeichnet**, daß die Verlängerung (32) an einer Gerinnesohle (14) eines Abwassergerinnes (12) dichtend anliegt.

6. Vorrichtung nach einem der vorhergehenden Ansprüche, **dadurch gekennzeichnet**, daß die Verlängerung (42) eine Bodenplatte (38) aufweist.

7. Vorrichtung nach Anspruch 5, **dadurch gekennzeichnet**, daß die Verlängerung (32) über Dichtlippen an der Gerinnesohle (14) anliegt.

8. Vorrichtung nach einem der vorhergehenden Ansprüche, **dadurch gekennzeichnet**, daß die Wasserstrahldüse (42) derart angeordnet ist, daß sie eine gegen den Mantel (34) der Verlängerung (32) gerichtete Strömung erzeugt.

9. Vorrichtung nach einem der vorhergehenden Ansprüche, **dadurch gekennzeichnet**, daß eine Düsenaustrittsöffnung (58) der Wasserstrahldüse (42) in einem Winkel (β) zu einer Axialen (60) der Verlängerung (32) angeordnet ist.

10. Vorrichtung nach einem der vorhergehenden Ansprüche, **dadurch gekennzeichnet**, daß die Düsenaustrittsöffnung (58) in einem Winkel zu der Bodenplatte (38) der Verlängerung (32) angeordnet ist.

11. Vorrichtung nach einem der vorhergehenden Ansprüche, **dadurch gekennzeichnet**, daß über den Mantel (34) der Verlängerung (32) verteilt wenigstens zwei Wasserstrahldüsen 42 angeordnet sind.

12. Vorrichtung nach einem der vorhergehenden Ansprüche, **dadurch gekennzeichnet**, daß die Austragseinrichtung (18) eine Transportspirale aufweist, die von einem einen Siebbereich bildenden Siebkorb (26) umgriffen wird.

13. Vorrichtung nach Anspruch 12, **dadurch gekennzeichnet**, daß der Siebkorb (26) die Transportspirale zu 60 % bis 80 %, vorzugsweise 70 % umschließt und oben offen ist.

14. Vorrichtung nach einem der vorhergehenden Ansprüche, **dadurch gekennzeichnet**, daß die Wasserstrahldüse (42) mit einer Tauchpumpe (46) verbunden ist, die in Strömungsrichtung der Abwasserströmung (16) der Verlängerung (42) angeordnet ist.
